# EUROPÄISCHE PATENTSCHRIFT

(11) **EP 3 552 194 B1**
(45) Veröffentlichungstag und Bekanntmachung des Hinweises auf die Patenterteilung: **16.09.2020**
(21) Anmeldenummer: 17808906.6
(22) Anmeldetag: 04.12.2017
(51) Int. Cl.: G08G 1/01, B62D 15/02, G08G 1/0967, G08G 1/14

(54) **VERFAHREN ZUR BEREITSTELLUNG VON ERGEBNISDATEN, DIE VON EINEM KRAFTFAHRZEUGUMFELD ABHÄNGEN**
METHOD FOR PROVIDING RESULT DATA WHICH DEPEND ON A MOTOR VEHICLE ENVIRONMENT
PROCÉDÉ DE FOURNITURE DE DONNÉES DE RÉSULTAT QUI DÉPENDENT D'UN ENVIRONNEMENT DE VÉHICULE AUTOMOBILE

(30) Priorität: 08.12.2016 DE 102016224510
(43) Veröffentlichungstag der Anmeldung: 16.10.2019
(73) Patentinhaber: Audi AG, 85045 Ingolstadt (DE)
(72) Erfinder: ALTINGER, Harald, 85049 Gerolfing (DE); SCHULLER, Florian, 85737 Ismaning (DE); FEIST, Christian, 85049 Ingolstadt (DE)
(86) Internationale Anmeldenummer: PCT/EP2017/081392
(87) Internationale Veröffentlichungsnummer: WO 2018/104239

(56) Entgegenhaltungen:
- WO-A1-2016/138942
- US-A1- 2015 241 880

## Beschreibung

Die Erfindung betrifft ein Verfahren zur Bereitstellung von Ergebnisdaten, die von einem Kraftfahrzeugumfeld eines empfangenden Kraftfahrzeugs abhängen, durch eine Infrastruktureinrichtung an das empfangende Kraftfahrzeug. Daneben betrifft die Erfindung ein Kraftfahrzeug sowie eine Zentraleinrichtung.

Für eine Vielzahl von Fahrerassistenzsystemen ist eine detaillierte Umfelderfassung wesentlich. Soll ein vollautomatisierter Fahrbetrieb durchgeführt werden, der insbesondere ohne Anwesenheit eines Fahrers im Kraftfahrzeug durchgeführt werden kann, ist dies nur dann möglich, wenn exakte Informationen über das Kraftfahrzeugumfeld vorliegen. Soll eine ausreichend genaue Umfelderfassung ausschließlich durch fahrzeugeigene Sensoren erfolgen, ist eine hochaufwendige Sensorik erforderlich. Zudem sind komplexe Fahrsituationen möglich, in denen alleine durch kraftfahrzeugeigene Sensorik grundsätzlich keine ausreichende Umfelderfassung möglich ist, da beispielsweise gewisse Umfeldbereiche verdeckt sein können. Diese Problematik ist beispielsweise bei einer automatischen Führung von Kraftfahrzeugen durch Parkhäuser oder Tiefgaragen hochrelevant, da in diesen relevante Bereiche durch Wände, Säulen und/oder andere Kraftfahrzeuge verdeckt sein können.

Es ist daher bekannt, Sensordaten von anderen Kraftfahrzeugen oder Infrastruktureinrichtungen zu empfangen und auszuwerten. Beispielsweise offenbart die Druckschrift DE 10 2008 042 565 A1 ein Verfahren zum Betreiben einer Fahrerassistenzeinrichtung, bei dem der Fahrerassistenzeinrichtung von mindestens einer externen Einrichtung externe Sensordaten über eine Verkehrssituation bereitgestellt werden. Diese können durch Sensoren anderer Fahrzeuge oder von Infrastruktureinrichtungen bereitgestellt werden.

Ein ähnliches Vorgehen ist auch aus der Druckschrift DE 10 2014 214 505 A1 bekannt. Gemäß dieser Druckschrift werden zur Erstellung eines Umfeldmodells zwar in erster Linie Sensordaten von Sensorsystemen des eigenen Fahrzeugs genutzt, es können jedoch auch Sensordaten anderer Fahrzeuge oder von infrastrukturellen Sensorsystemen genutzt werden. Das Dokument WO2016/138942 offenbart ein Verfahren zur Fahrassistenz durch Benutzung von kollaborativen zum Fahrzeug externen Sensoren.

Nachteilige an dem erläuterten Vorgehen ist es, dass das Kraftfahrzeug selbst relevante Datenquellen erkennen und die von diesen bereitgestellten Daten verarbeiten muss. In komplexen Fahrsituationen kann es jedoch relativ aufwendig sein, zu erkennen, welche Sensordaten überhaupt für eine gegebene Fahrsituation relevant sind, womit auch eine Vielzahl von nicht relevanten Sensorinformationen verarbeitet werden muss. Somit steigt der Verarbeitungsaufwand im Kraftfahrzeug, was unter Umständen auch zu verlängerten Reaktionszeiten von Fahrerassistenzsystemen führen kann, die diese Sensordaten auswerten. Zudem können durch andere Fahrzeuge Sensordaten nur dann bereitgestellt werden, wenn deren Sensoren auch betrieben werden. Dies ist beispielsweise bei parkenden Kraftfahrzeugen in Tiefgaragen oder Parkhäusern üblicherweise nicht der Fall, womit in entsprechenden Fahrsituationen als externe Sensordaten typischerweise nur die Sensordaten von infrastrukturseitigen Sensoren bereitstehen.

Dem erfindungsgemäßen Verfahren liegt somit die Aufgabe zugrunde, die Erfassung des Kraftfahrzeugumfelds insbesondere in komplexen Verkehrssituationen zu verbessern.

Die Aufgabe wird erfindungsgemäß durch ein Verfahren der eingangs genannten Art gelöst, das die folgenden Schritte umfasst:
- Auswählen wenigstens eines ausgewählten Kraftfahrzeugs das wenigstens eine Sensoreinrichtung aufweist, durch die zumindest ein Teil des Kraftfahrzeugumfeldes erfassbar ist, durch die Infrastruktureinrichtung,
- Senden einer Anfragenachricht an das ausgewählte Kraftfahrzeug durch die Infrastruktureinrichtung,
- Erfassen von zumindest Teile des Kraftfahrzeugumfelds beschreibenden Sensordaten durch die Sensoreinrichtung des ausgewählten Kraftfahrzeugs und Übertragen der Sensordaten oder von aus diesen durch eine Verarbeitungseinrichtung des ausgewählten Kraftfahrzeugs ermittelten Verarbeitungsdaten durch das ausgewählte Kraftfahrzeug an die Infrastruktureinrichtung bei Empfang der Anfragenachricht durch das ausgewählte Kraftfahrzeug,
- Bereitstellen der Ergebnisdaten an das empfangende Kraftfahrzeug durch die Infrastruktureinrichtung, wobei die Ergebnisdaten die Sensordaten oder die Verarbeitungsdaten umfassen oder aus diesen ermittelt werden.

Erfindungsgemäß wird somit vorgeschlagen, dass die Infrastruktureinrichtung die Kraftfahrzeuge beziehungsweise die Sensoreinrichtungen auswählt, durch die die Sensordaten für das empfangene Kraftfahrzeug erfasst werden. Diese Sensordaten oder aus diesen abgeleitete Daten werden zudem nicht direkt von dem ausgewählten Kraftfahrzeug an das empfangende Kraftfahrzeug übertragen, sondern die Übertragung erfolgt über die Infrastruktureinrichtung. Diese Datenübertragung wird durch eine Anfragenachricht der Infrastruktureinrichtung eingeleitet.

Das erfindungsgemäße Verfahren ermöglicht es, das empfangende Kraftfahrzeug deutlich einfacher auszubilden, da einerseits die Auswahl der Datenquellen über die Infrastruktureinrichtung erfolgt, womit die Komplexität der bereitgestellten Informationen reduziert werden kann, und andererseits durch die Infrastruktureinrichtung bereits große Teile der Verarbeitung der Sensordaten durchgeführt werden können. Beispielsweise kann im erfindungsgemäßen Verfahren bereits ein vollständiges Umfeldmodell als Ergebnisdaten an das empfangende Kraftfahrzeug bereitgestellt werden. In einer Weiterbildung des erfindungsgemäßen Verfahrens ist es auch möglich, dass als Ergebnisdaten direkt Steuerbefehle an das Kraftfahrzeug übertragen werden können, so dass ein automatischer Fahrbetrieb des Kraftfahrzeugs im Wesentlichen durch die Infrastruktureinrichtung steuerbar ist. Das erfindungsgemäße Verfahren ermöglicht es somit, komplexe Verarbeitungsfunktionen für das empfangende Kraftfahrzeug bereitzustellen, ohne dass diese im empfangenden Kraftfahrzeug selbst implementiert werden müssen.

Dadurch, dass im erfindungsgemäßen Verfahren die Kommunikation mit dem ausgewählten Kraftfahrzeug durch eine Anfragenachricht eingeleitet wird, ist es, wie später noch detailliert erläutert wird, möglich, weitere Systeme des ausgewählten Kraftfahrzeugs, also insbesondere die Sensoreinrichtung und eine zugeordnete Verarbeitungseinrichtung, erst dann zu aktivieren, wenn eine Anfragenachricht eingegangen ist. Dies kann insbesondere in den Fällen, in denen das ausgewählte Kraftfahrzeug selbst nicht in Betrieb ist, also beispielsweise parkt, zu einer deutlichen Energieersparnis führen.

In einer Weiterbildung des erfindungsgemäßen Verfahrens ist es möglich, dass die Infrastruktureinrichtung zunächst überprüft, ob eine Nutzung einer Sensoreinrichtung eines ausgewählten Kraftfahrzeugs überhaupt notwendig ist. Hierzu kann zunächst überprüft werden, welche Abschnitte des Kraftfahrzeugumfelds durch infrastrukturseitige Sensorik beziehungsweise durch Sensorik des empfangenen Kraftfahrzeugs erfasst werden können beziehungsweise mit einer ausreichenden Genauigkeit erfasst werden können. Können alle relevanten Bereiche erfasst werden, ist es möglich, kein Kraftfahrzeug auszuwählen und keine Anfragenachricht an ein ausgewähltes Kraftfahrzeug zu senden. Wird hingegen ermittelt, dass weitere Informationen über das Kraftfahrzeugumfeld erforderlich sind, kann, wie obig erläutert, ein Auswählen des ausgewählten Kraftfahrzeugs und ein Senden einer Anfragenachricht an dieses Kraftfahrzeug erfolgen.

Die Auswahl des ausgewählten Kraftfahrzeugs kann in Abhängigkeit einer prognostizierten Trajektorie und/oder einer Position des empfangenden Kraftfahrzeugs erfolgen. Zusätzlich kann die Auswahl in Abhängigkeit des, beispielsweise zuvor an die Infrastruktureinrichtung übermittelten, Erfassungsbereichs der Sensoreinrichtung beziehungsweise in Abhängigkeit einer zuvor übertragenden Position und/oder Orientierung des ausgewählten Kraftfahrzeugs erfolgen. Das ausgewählte Kraftfahrzeug kann aus einer vorgegebenen Menge von Kraftfahrzeugen ausgewählt werden, die, wie später noch detailliert erläutert wird, automatisch durch die Infrastruktureinrichtung bestimmt werden kann.

Für den Datenaustausch können im erfindungsgemäßen Verfahren übliche Dateiformate und Protokolle genutzt werden. Die Kommunikation des empfangenden Kraftfahrzeugs und/oder der ausgewählten Kraftfahrzeuge mit der Infrstruktureinrichtung kann durch eine Car2X-Kommunikation, beispielsweise über WLAN oder ähnliche lokale Datennetze, erfolgen. Sensordaten können beispielsweise als Bilddaten oder in beliebigen anderen Datenformaten übertragen werden. Die Sensoreinrichtung kann eine Kamera, ein Radarsensor, ein Lidarsensor, ein Ultraschallsensor oder ein Laserscanner sein. Sie kann auch mehrere gleiche oder unterschiedliche Sensoren umfassen.

Zur Bereitstellung der Verarbeitungsdaten kann die Verarbeitungseinrichtung insbesondere eine Objekterkennung in den Sensordaten durchführen, um Objekte zu erkennen und/oder ihre Eigenschaften, beispielsweise ihre Geschwindigkeiten und/oder Positionen, zu erfassen.

Als das ausgewählte Kraftfahrzeug kann ein parkendes Kraftfahrzeug ausgewählt werden. Das Kraftfahrzeug kann insbesondere an einer definierten Parkposition, beispielsweise in einem Parkhaus oder einer Tiefgarage, parken. Es ist möglich, dass eine Antriebseinrichtung des Kraftfahrzeugs abgestellt ist und/oder dass das Bordnetz des Kraftfahrzeugs zumindest teilweise stromfrei geschaltet ist.

Als das ausgewählte Kraftfahrzeug kann insbesondere ein Kraftfahrzeug ausgewählt werden, dessen Sensoreinrichtung und/oder dessen Verarbeitungseinrichtung vor Empfang der Anfragenachricht in einem passiven Betriebsmodus betrieben werden, in dem keine Erfassung und/oder Verarbeitung der Sensordaten möglich ist, oder inaktiv sind, wobei die Sensoreinrichtung und/oder die Verarbeitungseinrichtung nach dem Empfang der Anfragenachricht in einen aktiven Betriebsmodus überführt werden, um die Sensordaten zu erfassen und/oder zu verarbeiten. Hierbei ist es insbesondere möglich, dass der Energieverbrauch der Sensoreinrichtung und/oder der Verarbeitungseinrichtung in dem passiven Betriebsmodus geringer ist als in dem aktiven Betriebsmodus. Insbesondere können die Sensoreinrichtung und/oder die Verarbeitungseinrichtung vor Empfang der Anfragenachricht stromfrei sein. Die Anfragenachricht kann somit unter anderem zum Aufwecken weiterer Einrichtungen des ausgewählten Kraftfahrzeugs dienen, um eine Datenerfassung zu ermöglichen. Hierdurch kann der Energieverbrauch insbesondere bei einer Nutzung von parkenden Kraftfahrzeugen als ausgewählte Kraftfahrzeuge reduziert werden.

Vor der Auswahl des ausgewählten Kraftfahrzeugs können mehrere in einem der Infrastruktureinrichtung zugeordneten Bereich vorhandene Kraftfahrzeuge durch die Infrastruktureinrichtung ermittelt werden, wonach das ausgewählte Kraftfahrzeug aus den vorhandenen Kraftfahrzeugen ausgewählt wird. Beispielsweise kann die Infrastruktureinrichtung einer Tiefgarage oder einem Parkhaus oder einem bestimmten Parkdeck einer Tiefgarage oder eines Parkhauses zugeordnet sein, wobei all jene Kraftfahrzeuge als vorhandene Kraftfahrzeuge erfasst werden können, die sich in dem Parkhaus, der Tiefgarage oder dem Parkdeck befinden beziehungsweise dort geparkt sind.

Die vorhandenen Kraftfahrzeuge können vorzugsweise ermittelt werden, indem sie eine jeweilige Anmeldenachricht an die Infrastruktureinrichtung senden. Die Anmeldenachricht kann beispielsweise beim Einfahren in den der Infrastruktureinrichtung zugeordneten Bereich gesendet werden. Alternativ oder ergänzend kann die Anmeldenachricht gesendet werden, wenn das Kraftfahrzeug geparkt wird beziehungsweise dessen Antriebseinrichtung abgestellt wird. Es ist auch möglich, dass die Anmeldenachricht auf eine Anforderungsnachricht der Infrastruktureinrichtung hin gesendet wird, wobei die Anforderungsnachricht beispielsweise periodisch durch die Infrastruktureinrichtung ausgesendet wird.

Die Anmeldenachricht kann eine Anmeldeinformation umfassen, die eine momentane oder voraussichtliche zukünftige Position und/oder Orientierung und/oder wenigstens eine Sensoreinrichtung des vorhandenen Kraftfahrzeugs betrifft, wobei das ausgewählte Kraftfahrzeug in Abhängigkeit der Anmeldeinformation ausgewählt wird. Die Anmeldeinformation kann beispielsweise einen Parkplatz beschreiben, auf dem das Kraftfahrzeug abgestellt ist beziehungsweise werden soll. Es ist jedoch auch möglich, dass in dem erfindungsgemäßen Verfahren fahrende Kraftfahrzeuge ausgewählt werden. Diese können beispielsweise regelmäßig ihre Position und/oder Ausrichtung, insbesondere in Form einer Anmeldenachricht, an die Infrastruktureinrichtung senden.

Bezüglich der Sensoreinrichtung können als Anmeldeinformation eine Ausrichtung der Sensoreinrichtung bezüglich des Kraftfahrzeugs, eine Art der Sensoreinrichtung, ein Erfassungswinkel und/oder eine Reichweite übertragen werden.

Alternativ oder ergänzend ist es möglich, dass in dem erfindungsgemäßen Verfahren die Position und/oder Orientierung der vorhandenen Kraftfahrzeuge beziehungsweise des ausgewählten Kraftfahrzeugs durch eine infrastrukturseitige Sensorik oder durch eine Sensorik des empfangenden Kraftfahrzeugs erfasst wird.

Das empfangende Kraftfahrzeug kann durch eine Steuereinrichtung des empfangenden Kraftfahrzeugs in Abhängigkeit der Ergebnisdaten automatisiert geführt werden. Hierbei können die Ergebnisdaten direkt Fahreingriffe beschreiben. In diesem Fall können in Abhängigkeit der Ergebnisdaten durch die Steuereinrichtung direkt Aktoren des Kraftfahrzeugs angesteuert werden, um in den Fahrbetrieb einzugreifen. Alternativ kann die Steuereinrichtung selbst die erforderlichen Fahreingriffe in Abhängigkeit der Ergebnisdaten ermitteln. Die Ergebnisdaten können hierbei beispielsweise Objekte betreffen, die bei der automatisierten Führung des Kraftfahrzeugs berücksichtigt werden sollen.

Die Ergebnisdaten können durch die Infrastruktureinrichtung in Abhängigkeit von weiteren Sensordaten ermittelt werden, die durch wenigstens eine infrastrukturseitige weitere Sensoreinrichtung erfasst werden. Beispielsweise kann durch Sensordatenfusion der infrastrukturseitig erfassten Sensordaten und der durch die Sensoreinrichtung des ausgewählten Kraftfahrzeugs erfassten Sensordaten ein Umfeldmodell generiert werden. Ergänzend oder alternativ können die Ergebnisdaten von Sensordaten mehrerer ausgewählter Kraftfahrzeuge abhängen.

Neben dem erfindungsgemäßen Verfahren betrifft die Erfindung ein Kraftfahrzeug, umfassend eine Kommunikationseinrichtung zur Kommunikation mit einer Infrastruktureinrichtung, wenigstens einer Sensoreinrichtung und eine Verarbeitungseinrichtung, wobei die Sensoreinrichtung und die Kommunikationseinrichtung durch die Verarbeitungseinrichtung derart ansteuerbar sind, dass das Kraftfahrzeug als das ausgewählte Kraftfahrzeug an dem erfindungsgemäßen Verfahren teilnimmt beziehungsweise teilnehmen kann.

Das erfindungsgemäße Kraftfahrzeug kann mit den zum erfindungsgemäßen Verfahren erläuterten Merkmalen weitergebildet werden. Insbesondere ist es möglich, dass durch eine Steuereinrichtung die Sensoreinrichtung und/oder eine Verarbeitungseinrichtung, die auch als Teil der Steuereinrichtung ausgebildet sein kann, in einen Stromsparmodus versetzt werden beziehungsweise deaktiviert werden können. Wird eine Anfragenachricht über die Kommunikationseinrichtung empfangen, können die entsprechenden Einrichtungen wieder aktiviert werden.

Zudem betrifft die Erfindung eine Zentraleinrichtung, umfassend eine Steuereinrichtung und eine Kommunikationseinrichtung, wobei die Kommunikationseinrichtung derart durch die Steuereinrichtung steuerbar ist, dass die Zentraleinrichtung an dem erfindungsgemäßen Verfahren teilnimmt bzw. teilnehmen kann. Auch die Zentraleinrichtung kann mit den zum erfindungsgemäßen Verfahren erläuterten Merkmalen weitergebildet werden.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: eine Fahrsituation mit mehreren Ausführungsbeispielen eines erfindungsgemäßen Kraftfahrzeugs, in der das erfindungsgemäße Verfahren nutzbar ist, und
- Fig. 2: ein Ablaufdiagramm eines Ausführungsbeispiels des erfindungsgemäßen Verfahrens.

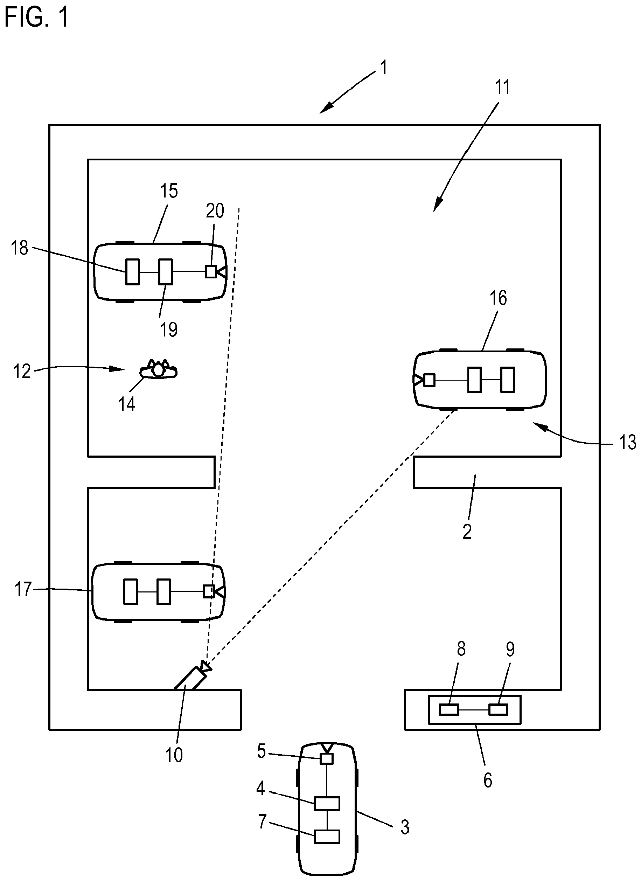

Fig. 1 zeigt eine Fahrsituation, in der ein Kraftfahrzeug 3 zu einer nicht dargestellten Parkposition in einem Parkhaus 1 geführt werden soll. Aufgrund zahlreicher Wände 2 ist die Fahrsituation in dem Parkhaus 1 unübersichtlich. Es soll eine vollautomatisierte Führung des Kraftfahrzeugs 3 zu der Parkposition erfolgen, bei der kein Fahrer notwendig ist. Aufgrund der unübersichtlichen Fahrsituation soll die Führung des Kraftfahrzeugs 3 hierbei durch eine Infrastruktureinrichtung 6 erfolgen, die Fahranweisungen über Kommunikationseinrichtungen 7, 8 an das Kraftfahrzeug 3 übermittelt. Das Kraftfahrzeug 3 ist somit in dem erläuterten Verfahren ein empfangendes Kraftfahrzeug 3, das Ergebnisdaten von der Infrastruktureinrichtung 6 empfängt. Entsprechende Fahranweisungen werden durch die Steuereinrichtung 9 der Zentraleinrichtung 6 ermittelt. Nach dem Empfang entsprechender Fahranweisungen steuert die kraftfahrzeugseitige Steuereinrichtung 4 nicht gezeigte Aktoren des Kraftfahrzeugs 3 an, um diese Fahranweisungen durchzuführen.

Für eine derartige automatische Führung des Kraftfahrzeugs 3 sind hochgenaue Informationen über das Kraftfahrzeugumfeld des Kraftfahrzeugs 3 erforderlich. Die über die kraftfahrzeugeigene Sensoreinrichtung 5 und die infrastrukturseitige weitere Sensoreinrichtung 10 ermittelten Sensordaten sind hierbei häufig nicht ausreichend. Beispielsweise erfasst die infrastrukturseitige Sensoreinrichtung 10 aufgrund der Wände 2 nur den Erfassungsbereich 11, womit die Bereiche 12, 13 verdeckt sind. Beispielsweise kann ein Fußgänger 14, der sich im Bereich 12 aufhält, durch die infrastrukturseitige Sensoreinrichtung 10 nicht und durch die kraftfahrzeugseitige Sensoreinrichtung 5 erst relativ spät erkannt werden.

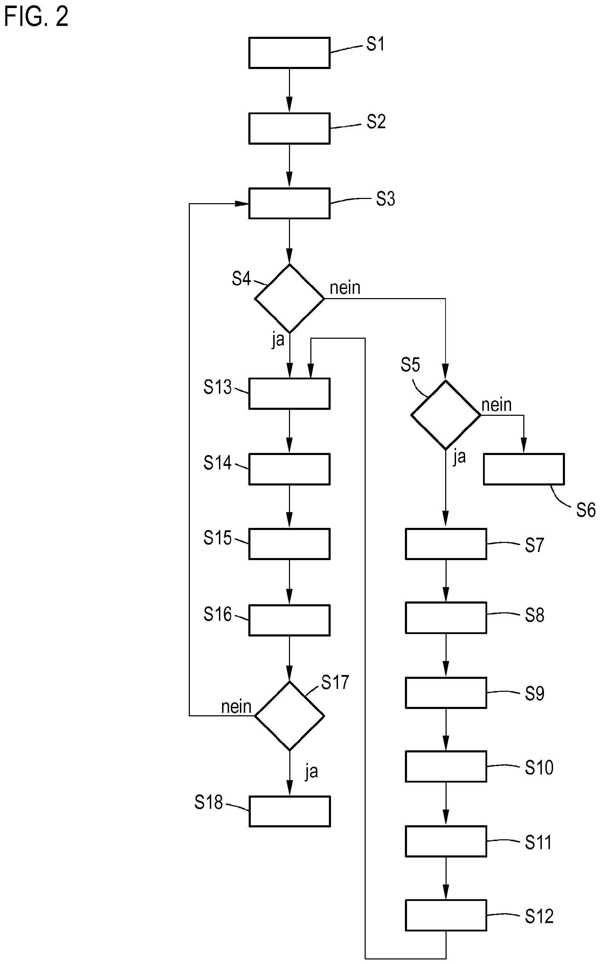

Die Umfelderfassung in der gezeigten Fahrsituation kann dadurch verbessert werden, dass zumindest Teile der Sensoreinrichtungen 20 von in der Infrastruktureinrichtung 1 vorhandene Kraftfahrzeuge 15, 16, 17 zur Umfelderfassung mit verwendet werden. Ein entsprechendes Verfahren wird im Folgenden mit Bezug auf das Ablaufdiagramm in Fig. 2 genauer erläutert.

Im Schritt S1 wird zunächst durch die Steuereinrichtung 9 der Infrastruktureinrichtung 6 ein Fahrziel für das Kraftfahrzeug 3 festgelegt. Bei einem Fahrziel kann es sich beispielsweise um einen freien Parkplatz handeln, zu dem das Kraftfahrzeug 3 geführt werden soll.

In Schritt S2 werden durch die Sensoreinrichtung 5 des Kraftfahrzeugs 3 sowie die infrastrukturseitige Sensoreinrichtung 10 Umfelddaten erfasst, die zumindest Teile des Umfelds des Kraftfahrzeugs 3 beschreiben. Anhand dieser Umfelddaten wird in Schritt S3 eine vorläufige Trajektorienplanung für das Kraftfahrzeug 3 durchgeführt.

In Schritt S4 wird überprüft, ob alle relevanten Umfeldbereiche mit ausreichender Güte erfasst wurden. Hierzu können jene Bereiche, durch die die Trajektorie führt beziehungsweise die nahe an der Trajektorie liegen, mit jenen Bereichen verglichen werden, die durch die Sensoreinrichtungen 5, 10 erfasst werden können. Können alle diese Bereiche mit ausreichender Güte erfasst werden, so kann das Verfahren direkt mit Schritt S13 fortgesetzt werden.

Ist dies jedoch nicht der Fall, so wird in Schritt S5 zunächst überprüft, ob die relevanten Bereiche durch die Sensoreinrichtungen 20 der vorhandenen Kraftfahrzeuge 15, 16, 17 erfasst werden können. Um dies zu ermöglichen, werden in einem vorangehenden, nicht gezeigten Schritt, die vorhandenen Kraftfahrzeuge 15, 16, 17 an der Infrastruktureinrichtung 6 angemeldet. Hierzu sendet jedes der Kraftfahrzeuge 15, 16, 17, wenn ein Parken des Kraftfahrzeugs 15, 16, 17 erkannt wird, beispielsweise beim Abstellen der nicht gezeigten Antriebseinrichtung, über eine jeweilige Kommunikationseinrichtung 18 eine Anmeldenachricht an die Kommunikationseinrichtung 8 der Infrastruktureinrichtung 6. Diese umfasst eine Anmeldeinformation, die die momentane Position und Orientierung des Kraftfahrzeugs 15, 16, 17 sowie Informationen über die Sensoreinrichtung 20 umfasst.

Als Information bezüglich der Position und Orientierung kann es ausreichend sein, den konkreten Parkplatz, auf dem das Kraftfahrzeug 15, 16, 17 geparkt ist, zu ermitteln. Ergänzend kann aber beispielsweise mit Hilfe der Sensoreinrichtung 20 ermittelt werden, wie das Kraftfahrzeug 15, 16, 17 bezüglich des jeweiligen Parkplatzes orientiert ist. Ergänzend oder alternativ können beispielsweise Positionsinformationen eines Satellitennavigationssystems oder Ähnliches genutzt werden, um die Anmeldeinformation zu bestimmen.

In einer alternativen Variante des Verfahrens wäre es auch möglich, dass die Anmeldenachricht bereits vor dem Parken des jeweiligen Kraftfahrzeugs 15, 16, 17 an die Infrastruktureinrichtung 6 gesendet wird. Hierbei könnte die Anmeldeinformation jenen Parkplatz betreffen, der durch das Kraftfahrzeug 15, 16, 17 angesteuert wird oder es können wiederholt die aktuelle Position und/oder Orientierung des Kraftfahrzeugs 15, 16, 17 betreffende Anmeldeinformationen an die Infrastruktureinrichtung 6 gesendet werden, während sich das Kraftfahrzeug 15, 16, 17 zum entsprechenden Parkplatz bewegt.

Bezüglich der Sensoreinrichtung 20 können eine Ausrichtung der Sensoreinrichtung bezüglich des Kraftfahrzeugs, eine Art der Sensoreinrichtung 20, ein Erfassungswinkel und eine Reichweite übertragen werden. Mit Hilfe dieser Informationen und der bekannten Position und Orientierung des Kraftfahrzeugs 15, 16, 17 kann durch die Steuereinrichtung 9 der Infrastruktureinrichtung ein Erfassungsbereich für die jeweilige Sensoreinrichtung 20 beziehungsweise für die jeweiligen vorhandenen Kraftfahrzeuge 15, 16, 17 ermittelt werden und mit den zu erfassenden relevanten Bereichen abgeglichen werden.

Wird in Schritt S5 ermittelt, dass auch mit Hilfe der vorhandenen Kraftfahrzeuge 15, 16, 17 nicht alle relevanten Bereiche erfasst werden können, wird das Verfahren mit Schritt S6 fortgesetzt, in dem das Kraftfahrzeug 3 entweder zu einem anderen Parkplatz geführt wird, für den eine entsprechende Erfassung möglich ist oder ein manuelles Parken des Kraftfahrzeugs 3 erforderlich wird.

Wurde jedoch ermittelt, dass mit Hilfe der Sensoreinrichtungen 20 der vorhandenen Kraftfahrzeuge 15, 16, 17 alle relevanten Bereiche erfasst werden können, so wird das Verfahren mit Schritt S7 fortgesetzt, in dem jene der vorhandenen Kraftfahrzeuge 15, 16, 17 ausgewählt werden, deren Sensoreinrichtungen 20 zur Sensordatenerfassung genutzt werden sollen. Eine derartige Auswahl ist vorteilhaft, da für die geparkten Kraftfahrzeuge 15, 16, 17 ein Energieverbrauch während des Parkens möglichst weit reduziert werden soll. Werden die Sensoreinrichtungen 20 somit nicht zur Sensordatenerfassung benötigt, können die Sensoreinrichtungen 20 und/oder die Verarbeitungseinrichtungen 19 der Kraftfahrzeuge 15, 16, 17 stromfrei geschaltet werden oder in einen Energiesparmodus versetzt werden, in dem ihre Leistungsaufnahme geringer ist als bei einem normalen Betrieb. Bei Kraftfahrzeugen 15, 16, 17 die in Schritt S7 nicht ausgewählt werden, kann dieser Betriebszustand beibehalten werden, so dass ein unnötiger Energieverbrauch vermieden wird.

Im gezeigten Beispiel sollen ausschließlich die Kraftfahrzeuge 15, 16 ausgewählt werden, um die Erfassung der Bereiche 12, 13 zu verbessern. Daher werden durch die Kommunikationseinrichtung 8 der Infrastruktureinrichtung 6 Anfragenachrichten an die Kommunikationseinrichtung 18 dieser Kraftfahrzeuge 15, 16 gesendet. Die Datenübertragung zwischen den Kraftfahrzeugen 3, 15, 16, 17 und der Infrastruktureinrichtung 6 kann über eine Car2X-Kommunikation erfolgen, beispielsweise über WLAN. Nach dem Empfang des Anforderungssignals durch die jeweilige Kommunikationseinrichtung 18 werden die jeweilige Verarbeitungseinrichtung 19 und die jeweilige Sensoreinrichtung 20 in Schritt S9 in einen aktiven Betriebsmodus überführt, um die Sensordaten zu erfassen und zu verarbeiten.

In Schritt S10 erfolgt anschließend eine Sensordatenerfassung durch die Sensoreinrichtungen 20. Die erfassten Sensordaten werden in Schritt S11 verarbeitet, um Objekte und deren Eigenschaften zu erkennen. Beispielsweise kann der Fußgänger 14 durch die Sensoreinrichtung 20 des Kraftfahrzeugs 16 erfasst werden. Durch die Verarbeitungseinrichtung 20 kann anschließend eine Objektklassifikation durchgeführt werden, um den Fußgänger 14 als solchen zu klassifizieren und es können Objektinformationen über eine Position, eine Bewegungsrichtung und eine Bewegungsgeschwindigkeit des Fußgängers 14 ermittelt werden. Die entsprechenden Objektinformationen werden in Schritt S12 als Verarbeitungsdaten an die Infrastruktureinrichtung 6 übertragen.

In Schritt S13 erfolgt eine Datenfusion, um ein Umfeldmodell des Kraftfahrzeugs 3 zu generieren. Hierzu können Sensordaten der Sensoreinrichtung 5 und Sensordaten der infrastrukturseitigen Sensoreinrichtung 10 genutzt werden, die mit den von den Kraftfahrzeugen 15, 16 bereitgestellten Verarbeitungsdaten fusioniert werden.

In Abhängigkeit des in Schritt S13 ermittelten Umfeldmodells kann in Schritt S14 eine genauere Trajektorie berechnet werden, der das Kraftfahrzeug 3 folgen soll und in Abhängigkeit dieser Trajektorie können Steuereingriffe für das Kraftfahrzeug 3 berechnet werden, die in Schritt S15 an das Kraftfahrzeug 3 übertragen werden. In Schritt S16 steuert die Steuereinrichtung 4 des Kraftfahrzeugs 3 nicht gezeigte Aktoren des Kraftfahrzeugs 3 an, um diese Steuereingriffe durchzuführen.

In Schritt S17 wird anschließend überprüft, ob das Fahrziel, also beispielsweise ein Parkplatz, bereits erreicht wurde. Ist dies nicht der Fall, so wird das Verfahren ab Schritt S3 wiederholt.

Wurde das Fahrziel erreicht, wird in Schritt S18 das Kraftfahrzeug 3 auf dem Parkplatz abgestellt. Das Kraftfahrzeug 3 sendet, wie zuvor die Kraftfahrzeuge 15, 16, 17, eine Anmeldenachricht an die Zentraleinrichtung 6, womit es anschließend für andere Kraftfahrzeuge zur Sensordatenerfassung bereitsteht. Nach dem Abstellen des Kraftfahrzeugs 3 können zudem einzelne Fahrzeugsysteme, beispielsweise die Sensoreinrichtung 5, deaktiviert werden. Eine Reaktivierung dieser Fahrzeugsysteme erfolgt beispielsweise dann, wenn eine Anfragenachricht von der Infrastruktureinrichtung 6 empfangen wird.

In alternativen Ausführungsformen ist es auch möglich, dass die Infrastruktureinrichtung 6 statt Steuereingriffen direkt Sensordaten oder aus diesen ermittelte Verarbeitungsdaten, z. B. ein Umfeldmodell, an das Kraftfahrzeug 3 bereitstellt. Diese können im Rahmen einer automatisierten oder assistierten Führung des Kraftfahrzeugs 3 genutzt werden oder auch alleine zur Fahrerinformation.

## Patentansprüche

1. Verfahren zur Bereitstellung von Ergebnisdaten, die von einem Kraftfahrzeugumfeld eines empfangenden Kraftfahrzeugs (3) abhängen, durch eine Infrastruktureinrichtung (6) an das empfangende Kraftfahrzeug (3), umfassend die Schritte:
- Auswählen wenigstens eines ausgewählten Kraftfahrzeugs (15, 16), das wenigstens eine Sensoreinrichtung (20) aufweist, durch die zumindest ein Teil des Kraftfahrzeugumfeldes erfassbar ist, durch die Infrastruktureinrichtung (6),
- Senden einer Anfragenachricht an das ausgewählte Kraftfahrzeug (15, 16) durch die Infrastruktureinrichtung (6),
- Erfassen von zumindest Teile des Kraftfahrzeugumfelds beschreibenden Sensordaten durch die Sensoreinrichtung (20) des ausgewählten Kraftfahrzeugs (15, 16) und Übertragen der Sensordaten oder von aus diesen durch eine Verarbeitungseinrichtung (19) des ausgewählten Kraftfahrzeugs (15, 16) ermittelten Verarbeitungsdaten durch das ausgewählte Kraftfahrzeug (15, 16) an die Infrastruktureinrichtung (6) bei Empfang der Anfragenachricht durch das ausgewählte Kraftfahrzeug (15, 16),
- Bereitstellen der Ergebnisdaten an das empfangende Kraftfahrzeug (3) durch die Infrastruktureinrichtung (6), wobei die Ergebnisdaten die Sensordaten oder die Verarbeitungsdaten umfassen oder aus diesen ermittelt werden.

2. Verfahren nach Anspruch 1,
**dadurch gekennzeichnet,**
**dass** als das ausgewählte Kraftfahrzeug (15, 16) ein parkendes Kraftfahrzeug (15, 16) ausgewählt wird.

3. Verfahren nach Anspruch 1 oder 2,
**dadurch gekennzeichnet,**
**dass** als das ausgewählte Kraftfahrzeug (15, 16) ein Kraftfahrzeug (15, 16) ausgewählt wird, dessen Sensoreinrichtung (20) und/oder dessen Verarbeitungseinrichtung (19) vor Empfang der Anfragenachricht in einem passiven Betriebsmodus betrieben werden, in dem keine Erfassung und/oder Verarbeitung der Sensordaten möglich ist, oder inaktiv sind, wobei die Sensoreinrichtung (20) und/oder die Verarbeitungseinrichtung (19) nach dem Empfang der Anfragenachricht in einen aktiven Betriebsmodus überführt werden, um die Sensordaten zu erfassen und/oder zu verarbeiten.

4. Verfahren nach einem der vorangehenden Ansprüche,
**dadurch gekennzeichnet,**
**dass** vor der Auswahl des ausgewählten Kraftfahrzeugs (15, 16) mehrere in einem der Infrastruktureinrichtung (6) zugeordneten Bereich vorhandene Kraftfahrzeuge (15, 16, 17) durch die Infrastruktureinrichtung (6) ermittelt werden, wonach das ausgewählte Kraftfahrzeug (15, 16) aus den vorhandenen Kraftfahrzeugen (15, 16, 17) ausgewählt wird.

5. Verfahren nach Anspruch 4,
**dadurch gekennzeichnet,**
**dass** die vorhandenen Kraftfahrzeuge (15, 16, 17) ermittelt werden, indem sie eine jeweilige Anmeldenachricht an die Infrastruktureinrichtung (6) senden.

6. Verfahren nach Anspruch 5,
**dadurch gekennzeichnet,**
**dass** die Anmeldenachricht eine Anmeldeinformation umfasst, die eine momentane oder voraussichtliche zukünftige Position und/oder Orientierung und/oder wenigstens eine Sensoreinrichtung (20) des vorhandenen Kraftfahrzeugs (15, 16, 17) betrifft, wobei das ausgewählte Kraftfahrzeug (15, 16) in Abhängigkeit der Anmeldeinformation ausgewählt wird.

7. Verfahren nach einem der vorangehenden Ansprüche,
**dadurch gekennzeichnet,**
**dass** das empfangende Kraftfahrzeug (3) durch eine Steuereinrichtung (4) des empfangenden Kraftfahrzeugs (3) in Abhängigkeit der Ergebnisdaten automatisiert geführt wird.

8. Verfahren nach einem der vorangehenden Ansprüche,
**dadurch gekennzeichnet,**
**dass** die Ergebnisdaten durch die Infrastruktureinrichtung (6) in Abhängigkeit von weiteren Sensordaten ermittelt werden, die durch wenigstens eine infrastrukturseitige weitere Sensoreinrichtung (10) erfasst werden.

9. Kraftfahrzeug, umfassend eine Kommunikationseinrichtung (18) zur Kommunikation mit einer Infrastruktureinrichtung (6), wenigstens eine Sensoreinrichtung (20) und eine Verarbeitungseinrichtung (19), d
adurch gekennzeichnet,
dass die Sensoreinrichtung (20) und die Kommunikationseinrichtung (18) dazu ausgebildet sind, durch die Verarbeitungseinrichtung (19) derart angesteuert zu werden,
dass das Kraftfahrzeug (15, 16, 17) als das ausgewählte Kraftfahrzeug (15, 16) an dem Verfahren gemäß einem der vorangehenden Ansprüche teilnimmt.

10. Infrastruktureinrichtung, umfassend eine Steuereinrichtung (9) und eine Kommunikationseinrichtung (8),
**dadurch gekennzeichnet,**
**dass** die Kommunikationseinrichtung (8) derart ausgebildet ist, durch die Steuereinrichtung (9) gesteuert zu werden,
**dass** die Infrastruktureinrichtung (7) an dem Verfahren nach einem der Ansprüche 1 bis 8 teilnimmt.

## Claims

1. Method for providing result data, which depend on a motor vehicle environment of a receiving motor vehicle (3), to the receiving motor vehicle (3) by means of an infrastructure device (6), comprising the steps:
- selection by the infrastructure device (6) of at least one selected motor vehicle (15, 16) which has at least one sensor device (20) by means of which at least part of the motor vehicle environment can be captured,
- transmitting a request message to the selected motor vehicle (15, 16) by means of the infrastructure device (6),
- capturing sensor data describing at least parts of the motor vehicle environment by means of the sensor device (20) of the selected motor vehicle (15, 16) and transmitting the sensor data, or processing data determined from this by a processing apparatus (19) of the selected motor vehicle (15, 16), to the infrastructure device (6) by means of the selected motor vehicle (15, 16) upon receipt of the request message by the selected motor vehicle (15, 16),
- making the result data available to the receiving motor vehicle (3) by means of the infrastructure device (6), wherein the result data comprise the sensor data or the processing data, or are determined from these.

2. Method according to claim 1,
**characterised in that**
a parked motor vehicle (15, 16) is selected as the selected motor vehicle (15, 16).

3. Method according to claim 1 or 2,
**characterised in that**
a motor vehicle (15, 16) is selected as the selected motor vehicle (15, 16), whose sensor device (20) and/or whose processing apparatus (19) before receiving the request message are operated in a passive operating mode, in which the sensor data cannot be captured and/or processed or are inactive, wherein the sensor device (20) and/or the processing apparatus (19) are transferred to an active operating mode after receipt of the request message, in order to capture and/or process the sensor data.

4. Method according to any one of the preceding claims
**characterised in that**
before the selection of the selected motor vehicle (15, 16), a plurality of motor vehicles (15, 16, 17) present in an area assigned to the infrastructure device (6) are determined by the infrastructure device (6), after which the selected motor vehicle (15, 16) is selected from the present motor vehicles (15, 16, 17).

5. Method according to claim 4,
**characterised in that**
the present motor vehicles (15, 16, 17) are determined by sending a respective registration message to the infrastructure device (6).

6. Method according to claim 5,
**characterised in that**
the registration message comprises registration information which relates to a current or expected future position and/or orientation and/or at least one sensor device (20) of the present motor vehicle (15, 16, 17), wherein the selected motor vehicle (15, 16) is selected depending on the registration information.

7. Method according to any one of the preceding claims
**characterised in that**
the receiving motor vehicle (3) is guided automatically by a control apparatus (4) of the receiving motor vehicle (3) depending on the result data.

8. Method according to any one of the preceding claims
**characterised in that**
the result data are determined by the infrastructure device (6) as a function of further sensor data, which are recorded by at least one additional infrastructural sensor device (10).

9. Motor vehicle, comprising a communication apparatus (18) for communication with an infrastructure device (6), at least one sensor device (20) and a processing apparatus (19),
**characterised in that**
the sensor device (20) and the communication apparatus (18) are designed to be controlled by the processing apparatus (19) in such a way that the motor vehicle (15, 16, 17) takes part in the method according to any one of the preceding claims as the selected motor vehicle (15, 16).

10. Infrastructure device, comprising a control apparatus (9) and a communication apparatus (8),
**characterised in that**
the communication apparatus (8) is designed to be controlled by the control apparatus (9), so that the infrastructure device (7) participates in the method according to any one of claims 1 to 8.

## Revendications

1. Procédé pour fournir des données de résultat, qui dépendent d'un environnement d'un véhicule automobile récepteur (3), par l'intermédiaire d'un dispositif d'infrastructure (6) au véhicule automobile récepteur (3), comprenant les étapes consistant à :
- sélectionner au moins un véhicule automobile sélectionné (15, 16), qui présente au moins un dispositif de détection (20) au moyen duquel au moins une partie de l'environnement de véhicule automobile peut être détectée par le dispositif d'infrastructure (6),
- envoyer un message de demande au véhicule automobile sélectionné (15, 16) par le dispositif d'infrastructure (6),
- détecter des données de capteur décrivant au moins des parties de l'environnement de véhicule automobile par le dispositif de détection (20) du véhicule automobile sélectionné (15, 16) et transmettre des données de capteur ou des données de traitement déterminées à partir de celles-ci par un dispositif de traitement (19) du véhicule automobile sélectionné (15, 16) par le véhicule automobile sélectionné (15, 16) au dispositif d'infrastructure (6) à la réception du message de demande par le véhicule automobile sélectionné (15, 16),
- fournir les données de résultat au véhicule automobile récepteur (3) par le dispositif d'infrastructure (6), les données de résultat comprenant les données de capteur ou les données de traitement ou étant déterminées à partir de celles-ci.

2. Procédé selon la revendication 1,
**caractérisé en ce que**
un véhicule automobile en stationnement (15, 16) est sélectionné en tant que véhicule automobile sélectionné (15, 16).

3. Procédé selon la revendication 1 ou 2,
**caractérisé en ce que**
un véhicule automobile (15, 16) est sélectionné en tant que véhicule automobile sélectionné (15, 16), dont le dispositif de détection (20) et/ou le dispositif de traitement (19) fonctionnent dans un mode de fonctionnement passif, aucune détection et/ou traitement des données de détection n'étant possible, ou sont inactifs avant la réception du message de demande, le dispositif de détection (20) et/ou le dispositif de traitement (19) étant convertis en un mode de fonctionnement actif après la réception du message de demande afin d'acquérir et/ou de traiter les données de détection.

4. Procédé selon l'une quelconque des revendications précédentes,
**caractérisé en ce que**
avant la sélection du véhicule automobile sélectionné (15, 16), plusieurs véhicules automobiles (15, 16, 17) présents dans une zone affectée au dispositif d'infrastructure (6) sont déterminés par le dispositif d'infrastructure (6), après quoi le véhicule automobile sélectionné (15, 16) est sélectionné parmi les véhicules automobiles existants (15, 16, 17).

5. Procédé selon la revendication 4,
**caractérisé en ce que**
les véhicules automobiles existants (15, 16, 17) sont déterminés en envoyant un message d'enregistrement respectif au dispositif d'infrastructure (6).

6. Procédé selon la revendication 5,
**caractérisé en ce que**
le message d'enregistrement comprend une information d'enregistrement relative à une position et/ou une orientation actuelle ou future prévue et/ou au moins un dispositif de détection (20) du véhicule automobile existant (15, 16, 17), le véhicule automobile sélectionné (15, 16) étant sélectionné en fonction de l'information d'enregistrement.

7. Procédé selon l'une quelconque des revendications précédentes,
**caractérisé en ce que**
le véhicule automobile récepteur (3) est automatiquement guidé par un dispositif de commande (4) du véhicule automobile récepteur (3) en fonction des données de résultat.

8. Procédé selon l'une quelconque des revendications précédentes,
**caractérisé en ce que**
les données de résultat sont déterminées par le dispositif d'infrastructure (6) en fonction d'autres données de capteur qui sont détectées par au moins un autre dispositif de détection (10) du côté de l'infrastructure.

9. Véhicule automobile comprenant un dispositif de communication (18) pour la communication avec un dispositif d'infrastructure (6), au moins un dispositif de détection (20) et un dispositif de traitement (19), **caractérisé en ce que**
le dispositif de détection (20) et le dispositif de communication (18) sont conçus pour être commandés par le dispositif de traitement (19) de sorte que le véhicule automobile (15, 16, 17), en tant que véhicule automobile sélectionné (15, 16), participe au procédé selon l'une quelconque des revendications précédentes.

10. Dispositif d'infrastructure comprenant un dispositif de commande (9) et un dispositif de communication (8),
**caractérisé en ce que**
le dispositif de communication (8) est conçu pour être commandé par le dispositif de commande (9) de sorte que le dispositif d'infrastructure (7) participe au procédé selon l'une quelconque des revendications 1 à 8.
